Europäisches Patentamt

European Patent Office

Office européen des brevets

(19)

(11) Numéro de publication : **0 010 038**
**B1**

(12) **FASCICULE DE BREVET EUROPÉEN**

(45) Date de publication du fascicule du brevet :
22.09.82

(51) Int. Cl.³ : **F 23 D 13/38**, F 23 D 13/24,
F 23 D 13/00

(21) Numéro de dépôt : **79400692.4**

(22) Date de dépôt : **28.09.79**

(54) **Chalumeau à deux gaz.**

(30) Priorité : **29.09.78 FR 7827934**

(43) Date de publication de la demande :
**16.04.80 (Bulletin 80/08)**

(45) Mention de la délivrance du brevet :
**22.09.82 Bulletin 82/38**

(84) Etats contractants désignés :
**CH DE GB IT NL SE**

(56) Documents cités :
**DE C 378 527**
**FR A 644 713**
**FR A 1 018 220**
**FR A 2 244 948**
**FR A 2 371 623**
**FR E 35 141**
**FR E 61 874**

(73) Titulaire : **Anciens ETABLISSEMENTS Léon GUIL-
BERT & Fils
10-12 Rue Montlouis
F-75011 Paris (FR)**

(72) Inventeur : **Moumaneix, Francis
59 Bd du Midi
F-93340 Le Raincy (FR)**
Inventeur : **Marietta, César
52 Rue Nungesser et Coli
F-95320 Saint Leu la Forêt (FR)**

(74) Mandataire : **Mas, Paul Louis
CABINET BONNET THIRION 95 Boulevard Beaumarchais
F-75003 Paris (FR)**

Imprimerie Jouve, 18, rue St-Denis, 75001 Paris, France

## Chalumeau à deux gaz

La présente invention se rapporte à un chalumeau à deux gaz, notamment un gaz combustible et un gaz comburant, comportant un corps ayant un premier raccord d'entrée d'un premier gaz, un deuxième raccord d'entrée d'un deuxième gaz, un troisième raccord pour l'alimentation d'une lance en mélange des deux gaz, un premier conduit s'étendant entre le premier raccord et le troisième raccord et comportant un premier clapet formant robinet, et un deuxième conduit s'étendant entre le deuxième raccord et le troisième raccord et comportant un deuxième clapet formant robinet, chacun des deux clapets comportant un noyau à épaulement déplaçable axialement dans un alésage à siège et un joint d'étanchéité annulaire, une commande unique du débit global du mélange des deux gaz étant commune aux deux clapets et étant admise à agir simultanément sur ces deux clapets. Un chalumeau de ce type est, par exemple, décrit dans le brevet français 2 371 623.

Pour fixer les idées, le gaz combustible peut être du propane, du butane, de l'acétylène ou de l'hydrogène tandis que le gaz comburant est par exemple soit de l'oxygène, soit de l'air induit ou comprimé. Un tel chalumeau peut fonctionner notamment à 0,5 bar pour le gaz combustible et, lorsque de l'oxygène est utilisé, à deux bars pour l'oxygène.

En général, les chalumeaux de ce type ont une manœuvre délicate, notamment à l'allumage.

Ces chalumeaux présentent, en outre, l'inconvénient d'un réglage difficile aux faibles débits, ce qui amène parfois à leur associer une aiguille pour l'obtention d'un réglage fin, mais ces aiguilles sont fragiles et augmentent sensiblement l'encombrement et le coût de fabrication.

En général les chalumeaux ne permettent pas de travailler avec une large plage de débits et il est nécessaire de disposer d'un jeu de plusieurs chalumeaux pour assurer les débits allant d'une fraction de litre à l'heure à plusieurs milliers de litres à l'heure.

La présente invention a pour objet un chalumeau qui est exempt de ces inconvénients et qui permet commodément de respecter la proportion des débits de gaz combustible et de gaz comburant avec une maîtrise totale du débit du mélange, ceci avec une très large plage de débits allant depuis une fraction de litre jusqu'à plusieurs milliers de litres à l'heure.

Suivant l'invention, un chalumeau à deux gaz est caractérisé en ce que les deux noyaux sont disposés co-axialement dans un seul alésage à siège, la commande unique agissant axialement à partir d'une extrémité de cet alésage sur au moins un des noyaux, l'un au moins des deux clapets ayant des moyens de réglage de la proportion des débits des deux gaz, tandis qu'un passage de fuite est prévu dans chaque clapet et a une section transversale admise à varier par l'effet de la déformation élastique du joint d'étanchéité au moment de l'application de fermeture.

Des chalumeaux à deux gaz ayant des moyens de réglage de la proportion de débit des deux gaz sont décrits par exemple dans le brevet d'addition français 61 874 et dans le brevet allemand 378 527, tandis que des clapets à joint élastique et à passage de fuite sont notamment décrits dans le brevet français n° 2 244 948.

Suivant une propriété de ces clapets à joint élastique et à passage fuite qui a été mise en évidence par la Demanderesse, la courbe qui illustre les variations de la section de passage du robinet en échelle logarithmique, donc du débit en échelle logarithmique en fonction de la course d'ouverture en échelle linéaire, est sous forme d'une droite inclinée, alors que cette courbe est fortement incurvée dans le cas des robinets à pointeau et à aiguille.

Il résulte de cette propriété que lorsque deux clapets à joint élastique et à passage de fuite sont prévus dans un chalumeau à deux gaz, ces deux clapets peuvent être choisis facilement tels que leurs courbes linéaires représentatives soient deux droites inclinées parallèles, c'est-à-dire séparées par une distance verticale qui reste toujours la même, quelle que soit l'ouverture. Cette distance traduit la différence des logarithmes des débits, c'est-à-dire le logarithme du rapport des débits, lequel demeure ainsi constant quelle que soit l'ouverture.

Suivant une autre propriété des robinets à joint élastique et passage de fuite, l'élasticité du joint permet de poursuivre la course de fermeture au-delà du moment où le clapet commence à être fermé.

La combinaison d'une commande unique commune avec deux tels clapets dans un chalumeau à deux gaz a, du fait des deux propriétés sus-visées, pour double résultat de permettre, sans précaution particulière :

1. une maîtrise totale du débit du mélange des deux gaz, sans cesser de respecter le rapport approprié au bon fonctionnement des débits des deux gaz, quelle que soit la valeur, petite ou grande, du débit du mélange ;

2. la fermeture totale des deux clapets, même si l'un d'eux commence à être fermé avant l'autre, puisqu'il suffit de poursuivre le mouvement de fermeture pour fermer le deuxième clapet en continuant à comprimer le joint élastique du clapet fermé en premier.

Le chalumeau suivant l'invention a une construction simple et peu encombrante et une manœuvre facile grâce au fait qu'en combinaison avec ce qui précède, les deux noyaux des clapets sont disposés coaxialement dans un seul alésage à siège, la commande unique agissant axialement à partir d'une extrémité de cet alésage sur au moins un des noyaux, ce qui permet, en outre, de mettre à profit commodément l'autre extrémité, par exemple pour disposer les moyens de réglage de la proportion des débits des deux gaz.

Le chalumeau fonctionne avec une très large plage de débits allant de moins d'un litre à l'heure jusqu'à plusieurs milliers de litres à l'heure, alors que jusqu'à présent, il faut généralement un jeu d'au moins trois chalumeaux pour couvrir une telle plage de débits.

Des formes d'exécution de l'invention sont ci-après décrites à titre d'exemple en référence aux dessins annexés dans lesquels :

la figure 1 est une vue générale en coupe longitudinale d'un chalumeau à deux gaz suivant l'invention ;

la figure 2 est une vue à plus grande échelle des deux clapets de ce chalumeau et de leur commande commune ;

la figure 3 est une vue, à plus grande échelle encore, et en demi-coupe, de ces deux clapets ;

les figures 4 et 5 montrent, en perspective, les passages de fuite des deux clapets ;

la figure 6 est une vue d'une rondelle de réglage, en coupe suivant la ligne VI-VI de la figure 2 ;

la figure 7 est un diagramme illustrant les variations de la section de passage en échelle logarithmique des deux clapets en fonction de la course d'ouverture en échelle linéaire ;

la figure 8 est une vue en perspective éclatée d'une variante de la rondelle de réglage et de son montage ;

la figure 9 est une vue analogue à la figure 2 mais concerne une variante de chalumeau.

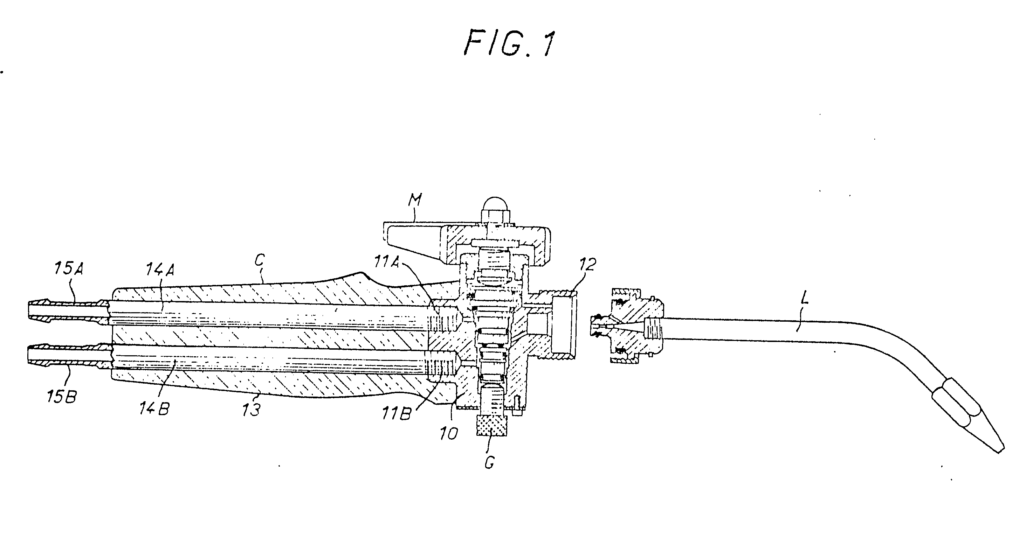

On se référera d'abord aux figures 1 à 7 qui concernent, à titre d'exemple non limitatif, un chalumeau C à deux gaz dont l'un est combustible par exemple propane, butane ou acétylène, tandis que l'autre est comburant par exemple oxygène ou air induit.

Pour fixer les idées, le chalumeau C fonctionne avec une pression de 0,5 bar pour le gaz combustible, et, lorsque de l'oxygène est utilisé, avec une pression de deux bars pour l'oxygène.

Ce chalumeau permet d'effectuer un grand nombre d'opération diverses avec un nombre réduit de lances interchangeables.

On voit à la figure 1 une lance L adaptée à une utilisation oxyacétylénique mais le chalumeau C permet également par une simple adjonction d'un raccord intermédiaire ou un simple changement de lance de fonctionner en oxycoupeur, ou en air comprimé-gaz ou encore en air induit-acétylène, en oxypropane ou oxybutane ou en air induit-propane ou air induit-butane. En air-induit gaz, l'injecteur d'oxygène sur la lance ne sera pas percé.

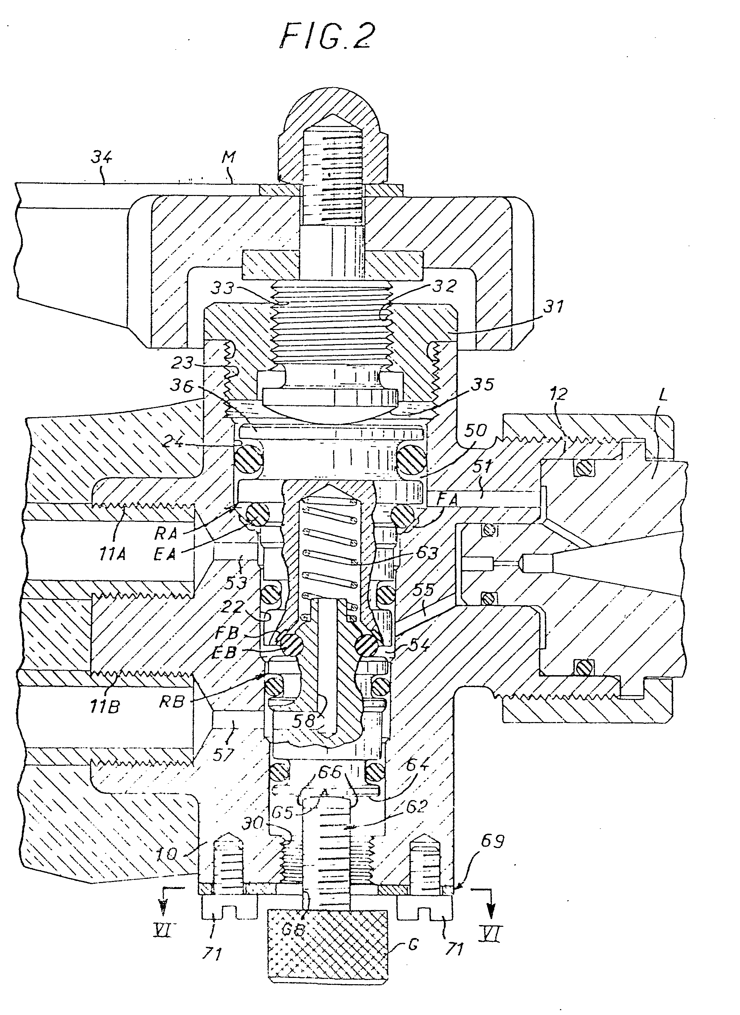

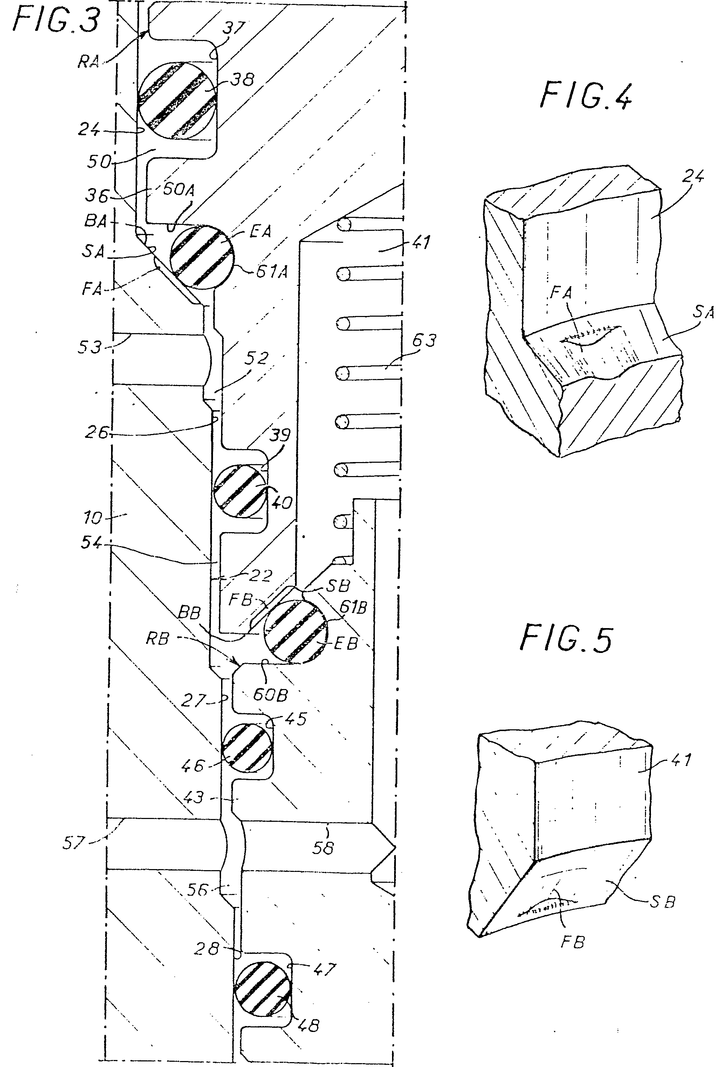

Le chalumeau C a un corps 10 (figures 1 et 2) ayant un premier raccord 11A d'entrée du premier gaz par exemple un gaz combustible tel que propane, butane, acétylène ou hydrogène, un deuxième raccord 11B d'entrée du deuxième gaz par exemple un gaz comburant tel qu'oxygène ou air induit ou air comprimé, et un troisième raccord 12 pour l'alimentation de la lance L en mélange des deux gaz.

Le corps 10 est disposé en tête d'une poignée 13 dans laquelle s'étendent deux canalisa-tions 14A et 14B respectivement reliées aux raccords 11A et 11B et présentant des embouts 15A et 15B pour une alimentation par tuyaux souples en gaz combustible et en gaz comburant.

Le corps 10 reçoit deux clapets coaxiaux RA et RB, formant robinets, agissant respectivement entre les raccords 11A et 12 et entre les raccords 11B et 12 et ayant une commande unique commune M admise à agir simultanément sur ces deux robinets RA et RB.

Dans l'exemple des figures 1 à 5, un des deux robinets, le robinet RB, est muni de moyens de réglage individuels G permettant de régler une fois pour toutes, pour un fonctionnement prédéterminé, les débits des deux robinets RA et RB l'un par rapport à l'autre, quel que soit le débit global contrôlé par la commande M.

Le corps 10 du chalumeau C comporte (figures 2 et 3) un trou central traversier 22 adapté à loger les deux robinets RA et RB. Le trou 22 comporte successivement, depuis la commande M disposée à une extrémité jusqu'aux moyens de réglage G disposés à l'autre extrémité : une partie taraudée 23 de grand diamètre (figure 2), une partie cylindrique 24 de plus petit diamètre (figures 2 et 3), un siège conique SA (figure 3), des parties cylindriques 26, 27 et 28 de diamètres décroissants et une partie taraudée 30 (figure 2) de plus petit diamètre encore.

Dans la partie taraudée 23 (figure 2) est engagé un bouchon fileté 31 qui présente lui-même un trou taraudé 32 dans lequel est engagée une vis 33 solidaire d'une manette 34 formant la commande M.

La vis 33 se termine par une extrémité arrondie 35 (figure 2) butant sur un noyau mobile d'obturation 36 qui agit en fermant les deux robinets RA et RB.

Ce premier robinet RA (figures 2 et 3) a donc un noyau mobile d'obturation 36 contre lequel agit en poussée l'extrémité 35 de la vis 33. Ce noyau 36 a une gorge annulaire 37 dans laquelle est disposé un joint torique d'étanchéité 38 coopérant avec la partie cylindrique 24 du trou central 22.

Le noyau mobile d'obturation 36 du premier robinet RA a un épaulement (figure 3) qui est constitué par un joint d'étanchéité élastique annulaire EA. Le noyau 36 est admis à être déplacé axialement pour rapprocher et éloigner le joint EA du siège conique SA.

Le noyau 36 comporte une seconde gorge annulaire 39 dans laquelle est logé un joint 40 coopérant avec la partie cylindrique 26 du trou central 22. Le noyau 36 comporte un trou borgne 41 dont l'ouverture forme un siège conique SB pour l'autre robinet RB. Le robinet RB a un noyau mobile 43 qui présente un épaulement formé par un joint d'étanchéité élastique annulaire EB et coopérant avec le siège conique SB.

Le noyau mobile 43 du deuxième robinet RB a une gorge annulaire 45 recevant un joint d'étanchéité 46 qui coopère avec la partie cylindrique 27 du trou central 22 et également une autre

gorge annulaire 47 qui reçoit un joint d'étanchéité 48 coopérant avec la partie cylindrique 28 de ce trou central 22.

L'intervalle annulaire 50 qui est défini dans le trou 22 autour du noyau 36 entre les joints 38 et EA communique en permanence par un canal 51 du corps 10 (figure 2) avec le raccord 12.

L'intervalle annulaire 52 qui est défini dans le trou 22 autour du noyau 36 entre les joints EA et 40 communique en permanence par un canal 53 du corps 10 (figure 2) avec le raccord 11A.

Les intervalles 50 et 52 sont mis en communication ou isolés suivant que le robinet RA est ouvert ou fermé.

L'ensemble 53, 52, 50, 51 constitue ainsi un premier conduit qui s'étend entre les raccords 11A et 13 et qui comporte l'intervalle annulaire 50, SA, 52 ayant le premier robinet RA.

L'intervalle annulaire 54 qui est défini dans le trou 22 autour des noyaux 36 et 43 entre les joints 40 et 46 communique en permanence par un canal 55 du corps 10 avec le raccord 12 (figure 2).

L'intervalle annulaire 56 qui est défini dans le trou 22 autour du noyau 43 entre les joints 46 et 48 communique en permanence d'une part par un canal 57 du corps 10 avec le raccord IIB et d'autre part par un canal 58 du noyau 43 avec le trou borgne 41 du noyau 36.

Les intervalles 54 et 56 sont mis en communication ou isolés suivant que le robinet RB est ouvert ou fermé.

L'ensemble 57, 56, 58, 41, 54, 55 constitue ainsi un deuxième conduit qui s'étend entre les raccords 11B et 12.

Chacun des deux robinets RA, RB a un passage de fuite respectivement FA, FB, dont la section transversale est admise à varier par l'effet de la déformation élastique du joint élastique respectivement EA, EB au moment du siégeage de fermeture.

Plus particulièrement, le passage de fuite FA, FB est formé par plusieurs dépressions ménagées superficiellement dans le siège conique SA, SB. Chaque dépression FA, FB est peu profonde et se raccorde progressivement à la partie courante du siège SA, SB afin d'éviter toute blessure du joint EA, EB. Chaque dépression FA, FB déborde de chaque côté du joint EA, EB lorsque celui-ci affleure le siège SA, SB.

Le passage de fuite FA, FB pourrait être constitué par un ou plusieurs rétrécissements du joint EA, EB, le siège SA, SB étant alors exempt de dépressions.

Le joint EA, EB est maintenu (figure 3) sur le noyau 36, 43, formant support de montage tant axialement par un appui radial 60A, 60B opposé au siège SA, SB que diamétralement par une bride circonférentielle 61A, 61B dont le diamètre correspond à celui du joint d'étanchéité EA, AB à l'état non déformé. Cette bride de maintien diamétral 61A, 61B du joint EA, EB s'étend sur la périphérie intérieure de ce joint et a une forme de congé qui se raccorde à l'appui de maintien axial 60A, 60B et autour duquel le joint d'étanchéité EA, EB se trouve emprisonné.

Des moyens de butée sont prévus en BA entre le noyau 36 et le siège SA du robinet RA et en BB entre les noyaux 43 et 36 des robinets RA et RB pour limiter la compression du joint EA, EB.

Dans le taraudage 30 du trou 22 (figure 2) est engagée une vis 62 constituant le moyen de réglage G du robinet RB.

Dans le trou borgne 41 est disposé un ressort 63 tendant d'une part à maintenir appliquée l'extrémité 64 du noyau 43 du robinet RB contre une extrémité arrondie 65 de la vis de réglage 62, et d'autre part à maintenir appliqué le noyau 36 contre la partie bombée 35 de la vis 33, ce qui a pour effet de rappeler les robinets RA et RB en ouverture.

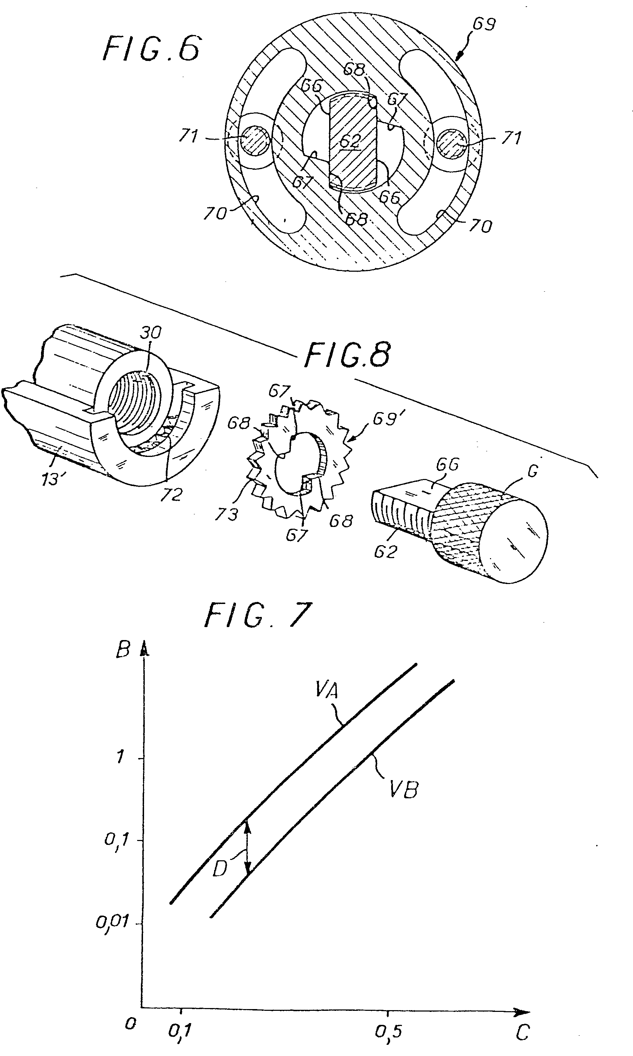

La vis de réglage 62 présente (figures 2 et 6) deux méplats 66 qui sont adaptés à coopérer en butée avec deux paires de portées 67 et 68 ménagées dans une rondelle 69. Celle-ci comporte deux lumières 70 dans lesquelles sont engagées des vis 71 fixées au corps 10.

La position angulaire de la rondelle 69 est ainsi réglable. Les portées 67 et 68 définissent la course angulaire de la vis 62 dans le perçage 30 une fois que la rondelle 69 a été positionnée angulairement.

De cette façon, dans les limites de cette course, la vis 62 permet de régler la richesse du mélange, c'est-à-dire la proportion des débits du gaz combustible et du gaz comburant. La limitation de la course de la vis 62 au moyen des portées de butée 67 et 68, limitation qui est elle-même réglage par décalage angulaire de la rondelle 69, a pour effet d'assurer que lorsque la commande M arrive en fin de course de fermeture par la première venue en butée en BA du robinet RA ou en BB du robinet RB, les deux robinets soient bien complètement fermés tous les deux, par compression suffisante de leurs joints EA et EB.

En vue du fonctionnement, on choisit d'abord une lance L parmi un jeu de lances en fonction du travail qui doit être exécuté avec un gaz combustible et un gaz comburant convenablement choisis par exemple de l'acétylène sous 0,5 bar et de l'oxygène sous 2 bars.

Le chalumeau étant réglé à l'occasion d'une utilisation précédente, on ouvre la manette 34, on allume, on corrige éventuellement la proportion au moyen de la vis de réglage G, qui fixe la proportion des débits de gaz combustible et de gaz comburant admis à alimenter la lance L.

La proportion des débits ainsi réglée en vue d'un fonctionnement optimum se trouve respectée quel que soit le débit global, petit ou grand, qui est contrôlé par la manette 34 de la commande M commune aux deux robinets RA et RB.

Cette proportion est conservée lorsqu'on éteint et on rallume, et lorsqu'on met en veilleuse ou à plein débit.

Une telle propriété résulte de ce que les robinets RA et RB sont à joint élastique EA, EB et à passage de fuite FA, FB.

On se référera au diagramme de la figure 7 qui illustre par la courbe VA, VB les variations de la section de passage, en échelle logarithmique, donc les variations du débit en échelle logarithmique du robinet RA, RB en fonction de la course d'ouverture de la commande M en échelle linéaire.

On a porté en abscisses C la course d'ouverture en millimètres en échelle linéaire et en ordonnées B la section de passage en millimètres carrés en échelle logarithmique. On voit que la courbe VA ou VB est linéaire et consiste en une droite inclinée, alors qu'une courbe correspondant à un robinet à pointeau ou à aiguille serait largement incurvée avec une partie arquée puis par une partie presque horizontale.

Les deux robinets RA et RB sont choisis facilement tels que leurs courbes linéaires représentatives VA et VB soient deux droites inclinées parallèles, c'est-à-dire séparées par une distance verticale D qui reste toujours la même, quelle que soit la valeur de la course d'ouverture C. La distance D traduit la différence des logarithmes des débits, c'est-à-dire le logarithme du rapport des débits des deux gaz, lequel demeure ainsi constant, quelle que soit la position de la commande M.

On appréciera également que lorsque la commande M arrive en fin de course de fermeture par venue en butée en BA ou en BB, les deux robinets RA et RB sont bien fermés l'un et l'autre.

En fonctionnement, le gaz combustible admis en 15A, 14A, 11A, 53 dans l'intervalle 52 franchit le premier robinet RA en passant entre le joint d'étanchéité EA et le siège conique SA et de là passe dans l'intervalle 50 et le canal 51 pour passer dans le raccord 12 d'alimentation de lance L.

Le gaz comburant est admis en 15B, 14B, 11B, 57 dans l'intervalle 56 et de là par le canal 58 du robinet RB dans le trou 41 du robinet RA pour passer ensuite entre le joint EB et le siège SB et, de là, dans l'intervalle 54 puis dans le canal 55 pour accéder au raccord 12 de la lance où il est admis à se mélanger avec le gaz combustible.

Le chalumeau permet un grand débit global à large ouverture lorsque la manette 34 permet un fort soulèvement de la vis 33 et par suite, grâce à l'action de rappel du ressort 63, un éloignement entre le joint EA et son siège SA et entre le joint EB et son siège SB. Le chalumeau a alors un très grand débit par exemple de plusieurs milliers de littres par heure, quelle que soit la valeur de la pression et en particulier lorsque la pression est de 0,5 bar pour le gaz combustible et de 2 bars pour le gaz comburant.

Lorsqu'on agit sur la manette 34 pour réduire le débit, la proportion des débits du gaz combustible et du gaz comburant se trouve respectée. Le joint EA se rapproche du siège SA et le joint EB se rapproche du siège SB.

Il est à noter que ce débit peut être amenuisé jusqu'à ce que l'un des joints EA, EB et de préférence les deux affleurent le siège SA, SB. Le débit est alors extrêmement réduit puisqu'il est admis à passer seulement par une faible fraction des dépressions de fuite FA, FB en contournant le joint EA, EB. Le débit peut être ainsi amenuisé jusqu'à moins d'un litre par heure. On appréciera que le réglage se trouve respecté avec une manœuvre simple au moyen de la seule manette 34.

En vue de la fermeture totale, on continue à déplacer la manette 34 dans le même sens, ce qui a pour effet de comprimer les joints EA, EB dans les dépressions FA, FB.

On appréciera que suivant la forme et le nombre des dépressions FA, FB et également les géométries des robinets RA, RB, le débit maximum peut être atteint pour une plus ou moins grande distance entre le joint EA, EB et le siège SA, SB et peut même être atteint lorsque le joint EA, EB affleure le siège SA, SB, ce débit maximum passant alors uniquement par les dépressions FA, FB sous le joint EA, EB.

Il est à noter que le joint d'étanchéité EA, EB qui est fortement maintenu diamétralement par le congé 61A, 61B ne subit aucun glissement frottant mais s'applique progressivement et se trouve comprimé dans d'excellentes conditions pour sa tenue.

La compression des joints d'étanchéité EA, EB est limitée par la première venue en butée en BA ou en BB.

Le chalumeau présente une excellente longévité et peut assurer un nombre considérable de manœuvres d'ouverture et de fermeture avant qu'il ne soit nécessaire de remplacer les joints.

On appréciera la construction particulièrement robuste du chalumeau suivant l'invention et sa manipulation très facile permettant un usage pratiquement universel à deux gaz avec un nombre réduit de lances et d'excellentes conditions de manœuvre puisque la commande du débit se fait au moyen de la seule manette 34 en respectant la proportion des débits de gaz combustible et de gaz comburant qui a été pré-réglée par la vis 62.

On appréciera également que cette vis de réglage 62 permet une alimentation à des pressions comprises dans une large fourchette.

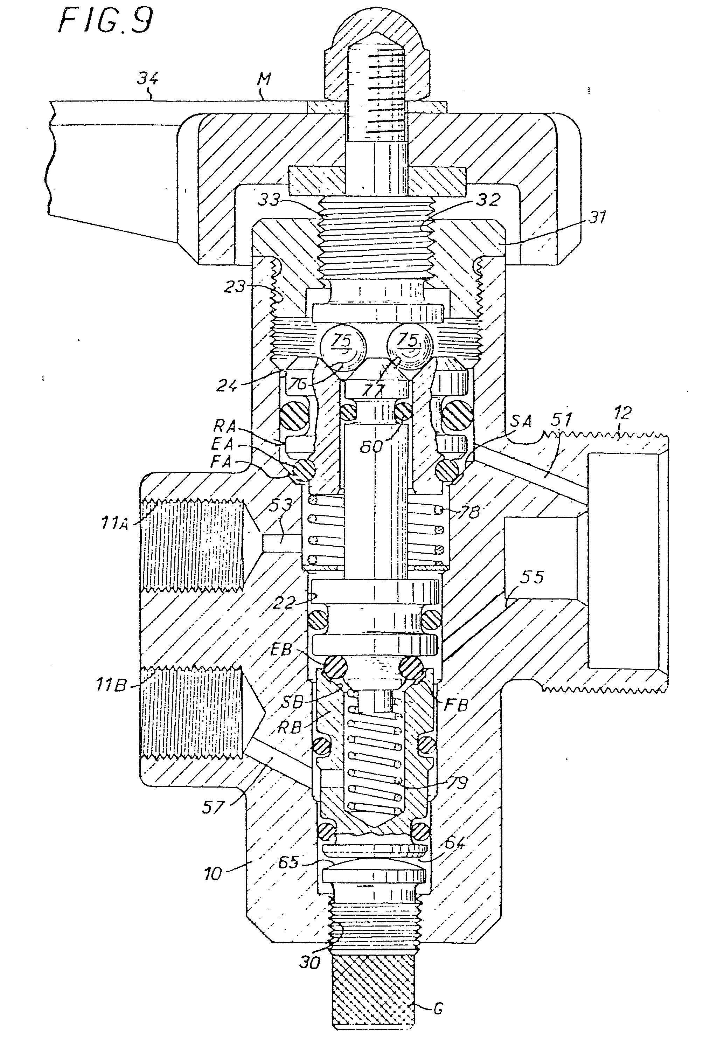

On se référera maintenant à la figure 8 qui concerne une variante de la rondelle de réglage 69, désignée ici par 69' et de son montage.

La poignée 13 est en deux demi-coquilles dont on voit l'une d'elles à la figure 8 en 13'. Elle présente un crantage en 72 avec lequel coopère un crantage 73 de la rondelle 69', ce qui permet un réglage angulaire de celle-ci. On reconnaît en 66 les méplats de la vis 62 et en 67, 68 les portées de butée de la rondelle.

Dans une autre variante (figure 9), la disposition est analogue à celle qui a été décrite en référence aux figures 1 à 7 ou en référence à la figure 8 et on reconnaît en 11A le raccord d'entrée de gaz combustible, en 11B le raccord d'entrée de gaz comburant et en 12 le raccord d'alimentation en mélange des deux gaz de la lance, en M la commande unique des deux robinets RA et RB, et en G la vis de réglage de la proportion des débits des deux gaz, mais ici la commande unique M agit sur les robinets RA et RB par l'intermédiaire de billes 75 interposées entre la vis 33 et des extrémités coniques 76 et 77 des noyaux des deux robinets RA et RB.

Deux ressorts de rappel 78 et 79 sont respectivement associés aux deux robinets et agissent sur leurs noyaux.

Comme précédemment, des passages de fuite FA et FB sont ménagés dans les sièges SA, SB des deux robinets et coopèrent avec les joints d'étanchéité annulaires EA, EB.

Les mêmes chiffres de référence ont été adoptés à la figure 9 et aux figures 1 à 7 pour désigner des éléments similaires.

Le fonctionnement est analogue à celui qui a été décrit en référence à ces figures 1 à 7.

La différence réside dans le dispositif de sécurité de fermeture qui, précédemment, limite la course en rotation de la vis de réglage G et qui, ici à la figure 9, est remplacé par le dispositif à billes et deux cônes en 75, 76, 77 chacun des noyaux étant muni d'un des deux cônes 76, 77.

Ce dispositif permet au premier robinet qui arrive en butée mécanique de servir de point d'appui pour transmettre par les billes 75 et les contacts sur les cônes 76 et 77 le mouvement de fermeture au deuxième robinet.

Ainsi, pour toutes les positions de la vis G, on garantit de pouvoir fermer les deux robinets par la commande unique M.

On a en quelque sorte décomposé le noyau 36 de la figure 2 en un ensemble de deux noyaux mobiles l'un dans l'autre et de billes, ces deux noyaux étant freinés l'un par rapport à l'autre par un joint d'étanchéité supplémentaire 80 monté sur la tige du noyau inférieur.

**Revendications**

1. Chalumeau à deux gaz, notamment un gaz combustible et un gaz comburant, comportant un corps (10) ayant un premier raccord (11A) d'entrée d'un premier gaz, un deuxième raccord (11B) d'entrée d'un deuxième gaz, un troisième raccord (12) pour l'alimentation d'une lance (L) en mélange des deux gaz, un premier conduit (53, 51) s'étendant entre le premier raccord (11A) et le troisième raccord (12) et comportant un premier clapet (RA), formant robinet et un deuxième conduit (57, 55) s'étendant entre le deuxième raccord (11B) et le troisième raccord (12) et comportant un deuxième clapet (RB), formant robinet, chacun des deux clapets (RA, RB) comportant un noyau (36, 43) à épaulement, admis à être déplacé dans un alésage à siège, et un joint d'étanchéité annulaire (EA, EB,) une commande unique (M) du débit global du mélange des deux gaz étant commune aux deux clapets (RA, RB) et étant admise à agir simultanément sur ces deux clapets, chalumeau caractérisé en ce que les deux noyaux (36, 43) sont disposés coaxialement dans un seul alésage (22) à siège, la commande unique (M) agissant axialement à partir d'une extrémité de cet alésage (22) sur au moins un des noyaux, l'un au moins des deux clapets (RA, RB) ayant des moyens de réglage (G.) de la proportion des débits des deux gaz, tandis qu'un passage de fuite (FA, FB) est prévu dans chaque clapet (RA, RB) et a une section transversale admise à varier par l'effet de la déformation élastique du joint d'étanchéité (EA, EB) au moment de la fermeture.

2. Chalumeau suivant la revendication 1, caractérisé en ce que les moyens de réglage (G) de la proportion des débits des deux gaz sont disposés à l'autre extrémité de l'alésage (22) et agissent sur le noyau disposé en face de ceux-ci.

3. Chalumeau suivant la revendication 1 ou la revendication 2, caractérisé en ce que la commande unique (M) agit sur un premier noyau (36) qui constitue un siège pour le deuxième noyau (43). (Fig. 2 et 3).

4. Chalumeau suivant la revendication 3, caractérisé en ce que le premier noyau (36) présente un trou borgne (41) avec lequel communique un canal (58) du deuxième noyau (43).

5. Chalumeau suivant la revendication 3, caractérisé en ce qu'un ressort (63) est interposé entre les deux noyaux (36) et (43) et tend à les écarter.

6. Chalumeau suivant la revendication 1 ou la revendication 2, caractérisé en ce que la commande unique (M) agit en parallèle sur les deux noyaux des deux clapets (RA, RB). (Fig. 9).

7. Chalumeau suivant la revendication 6, caractérisé en ce que des ressorts (78, 79) de rappel en ouverture agissent respectivement sur les noyaux des deux clapets (RA, RB).

8. Chalumeau suivant l'une quelconque des revendications précédents, caractérisé en ce que le joint (EA, EB) de chaque clapet (RA, RB) est maintenu axialement par un appui radial (60A, 60B) et diamétralement par une bride circonférentielle (61A, 61B) dont le diamètre correspond à celui du joint dans un état non déformé.

9. Chalumeau suivant l'une quelconque des revendications précédentes, caractérisé en ce que des moyens de butée (BA, BB) sont prévus entre le noyau et le siège de chaque clapet (RA, RB) pour limiter la compression du joint (EA, EB).

10. Chalumeau suivant l'une quelconque des revendications précédentes, caractérisé en ce que le raccord (12) porte-lance est adapté à recevoir, de manière interchangeable, des lances (L) de diverses formes.

**Claims**

1. Torch for two gases, in particular a fuel gas and a combustive gas, comprising a body (10) having a first connection (11A) for the inlet of a first gas, a second connection (11B) for the inlet of a second gas, a third connection (12) for supplying a nozzle (L) with a mixture of the two gases, a first passage (53, 51) extending between the first connection (11A) and the third connection (12) and comprising a first valve (RA) forming a stopcock and a second passage (57, 55) extending between the second connection (11B) and the

third connection (12) and comprising a second valve (RB) forming a stopcock, each of the two valves (RA, RB) comprising a shouldered core (36, 43) able to be displaced in a bore with a seat, and an annular sealing joint (EA, EB), a single control (M) of the total flow of the mixture of the two gases being common to the two valves (RA, RB) and being able to act simultaneously on these two valves, torch characterised in that the two cores (36, 43) are arranged coaxially in a single bore (22) with seat, the single control (M) acting axially from one end of this bore (22) on at least one of the cores, at least one of the two valves (RA, RB) having means (G) for adjusting the ratio of flows of the two gases, whereas an escape passage (FA, FB) is provided in each valve (RA, RB) and has a cross-section which can be varied by the action of the elastic deformation of the sealing joint (EA, EB) at the moment of closure.

2. Torch according to Claim 1, characterised in that the means (G) for adjusting the ratio of flows of the two gases are disposed at the other end of the bore (22) and act on the core arranged opposite thereto.

3. Torch according to Claim 1 or Claim 2, characterised in that the single control (M) acts on a first core (36) which forms a seat for the second core (43). (Figures 2 and 3).

4. Torch according to Claim 3, characterised in that the first core (35) has a blind hole (41) with which a duct (58) of the second core (43) communicates.

5. Torch according to Claim 3, characterised in that a spring (63) is interposed between the two cores (36) and (43) and tends to separate them.

6. Torch according to Claim 1 or Claim 2, characterised in that the single control (M) acts in parallel on the two cores of the two valves (RA, RB). (Figure 9)

7. Torch according to Claim 6, characterised in that, on opening, return springs (78, 79) act respectively on the cores of the two valves (RA, RB).

8. Torch according to any one of the preceding Claims, characterised in that the joint (EA, EB) of each flap valve (RA, RB) is retained axially by a radial support (60A, 60B) and diametrically by a circumferential flange (61A, 61B), the diameter of which corresponds to that of the joint in an undeformed state.

9. Torch according to any one of the preceding Claims, characterised in that abutment means (BA, BB) are provided between the core and the seat of each valve (RA, RB) so as to limit the compression of the joint (EA, EB).

10. Torch according to any one of the preceding Claims, characterised in that the nozzle-holder connection (12) is designed to receive, in interchangeable manner, nozzles (L) of different forms.

**Ansprüche**

1. Brenner für zwei Gase, insbesondere ein brennbares Gas und ein die Verbrennung unterhaltendes Gas, mit einem Gehäuse (10), das einen ersten Anschluß (11A) für ein erstes Gas und einen zweiten Anschluß (11B) für ein zweites Gas und einen dritten Anschluß (12) für die Speisung eines Brennerrohres (L) mit einem Gemisch der beiden Gase aufweist, mit einer ersten Verbindung (53, 51), die sich zwischen dem ersten Anschluß und dem dritten Anschluß erstreckt und ein erstes Ventil (RA) umfaßt, mit einer zweiten Verbindung (57, 55) zwischen dem zweiten Anschluß und dem dritten Anschluß, die ein zweites Ventil (RB) umfaßt, wobei beide Ventile einen mit einer Schulter (36, 43) versehenen Ventilkörper aufweisen, der in einer Sitzbohrung beweglich und mit einer ringförmigen Dichtung versehen ist, und mit einem beiden Ventilen gemeinsamen und gleichzeitig auf beide Ventilkörper einwirkenden Steuerelement (M) für die Gesamtmenge des Gemisches aus den beiden Gasen, dadurch gekennzeichnet, daß die beiden Ventilkörper (36, 43) koaxial in einer einzigen Sitzbohrung (22) angeordnet sind, daß das gemeinsame Steuerelement ausgehend von einem Ende der Sitzbohrung axial auf wenigstens einen der Ventilkörper (36) einwirkt, daß wenigstens eines der beiden Ventile (RA, RB) Einstellmittel (G) für den Mengenanteil der beiden Gase aufweist, während eine Leckstromöffnung (FA, FB) in jedem Ventil vorgesehen ist, die einen Querschnitt aufweist, der durch die elastische Verformung des Dichtringes (EA, EB) im Augenblick des Schließens veränderbar ist.

2. Brenner nach Anspruch 1, dadurch gekennzeichnet, daß die Einstellmittel (G) für die Mengenanteile der beiden Gase am gegenüberliegenden Ende der Sitzbohrung (22) angeordnet sind und auf den Ventilkörper einwirken, der ihnen zugewandt ist.

3. Brenner nach Anspruch 1, dadurch gekennzeichnet, daß das gemeinsame Steuerelement (M) auf einen ersten Ventilkörper (36) einwirkt, der einen Sitz für den zweiten Ventilkörper (43) bildet (Fig. 2 und 3).

4. Brenner nach Anspruch 3, dadurch gekennzeichnet, daß der erste Ventilkörper (36) eine Sackbohrung (41) aufweist, mit der ein Durchlaß (58) im zweiten Ventilkörper (43) in Verbindung steht.

5. Brenner nach Anspruch 3, dadurch gekennzeichnet, daß zwischen den beiden Ventilkörpern (36, 43) eine Feder (63) angeordnet ist, die auf diese im Sinne einer Trennung einwirkt.

6. Brenner nach Anspruch 1 oder 2, dadurch gekennzeichnet, daß das einzige Steuerelement (M) parallel auf die Ventilkörper der beiden Ventile (RA,RB) wirkt (Fig. 9).

7. Brenner nach Anspruch 6, dadurch gekennzeichnet, daß in Öffnungrichtung wirkende Federn (78, 79) vorgesehen sind, die jeweils auf die Ventilkörper der beiden Ventile (RA, RB) einwirken.

8. Brenner nach einem der vorhergehenden Ansprüche, dadurch gekennzeichnet, daß der Dichtring (EA, EB) jedes der beiden Ventile (RA, RB) axial durch eine radiale Schulter (60A, 60B) und diametral durch eine umlaufende Ringnut (61A, 61B) gehalten ist, deren Durchmesser dem Durchmesser des Dichtungsringes im unverformten Zustand entspricht.

9. Brenner nach einem der vorhergehenden Ansprüche, dadurch gekennzeichnet, daß Anschlagmittel (BA, BB) zwischen den Ventilkörpern und dem Sitz jedes der Ventile (RA, RB) vorgesehen sind, um die Zusammenpressung der Dichtungsringe (EA, EB) zu begrenzen.

10. Brenner nach einem der vorhergehenden Ansprüche, dadurch gekennzeichnet, daß der Brennerrohranschluß (12) so ausgebildet ist, daß er auswechselbar Brennerrohre (L) unterschiedlicher Formen aufnehmen kann.

# FIG.1

## FIG.2

FIG.3

0 010 038

FIG.4

FIG.5

FIG.6

71

71

70

70

62

66

66

67

68

67

68

69

FIG.8

30

13'

72

67

68

68

67

69'

73

66

G

62

FIG. 7

B

1

0,1

0,01

0

0,1

0,5

C

VA

VB

D

FIG.9